# EUROPEAN PATENT SPECIFICATION

(11) **EP 1 145 782 B1**
(45) Date of publication and mention of the grant of the patent: **12.05.2004**
(21) Application number: 01500099.5
(22) Date of filing: 10.04.2001
(51) Int. Cl.: B21D 28/00

(54) **Method for machining profiles such as door or window frame profiles and corresponding machine for machining profiles, such as profiles of frames and leaves of doors or windows.**
Verfahren zum Bearbeiten von Rahmenprofilen von Türen oder Fenstern und damit übereinstimmende Maschine zum Bearbeiten von Rahmen- und Flügelprofilen von Türen oder Fenstern
Méthode d' usinage des profilés de dormant de portes ou fenêtres et machine correspondente d' usinage des profilés de dormant et battant de portes ou fenêtres

(30) Priority: 10.04.2000 ES 200000919
(43) Date of publication of application: 17.10.2001
(73) Proprietor: Vicente Vila, S.L., 46600 Alcira (ES)
(72) Inventor: Vila Fernandez, Juan José, 46600 Alcira (ES)
(74) Representative: Sanz-Bermell Martinez, Alejandro

(56) References cited:
- WO-A-96/03254

## Description

The technical field involved in this invention is that of machining parts which constitute the profiles with which the frames of windows or doors and the leaves of these are formed.

The assembly of metal carpentry frames or similar requires making a number of perforations at the ends of these for securing the joining items such as screws or rivets. This securing often requires the insertion of inner pieces on said profiles to reinforce and hold the profiles together.

It is also necessary to perform a further machining operation on each of said profiles and particularly the one for fitting the handle.

Description of the previous state of the art.

There is already a well-known robot-operated machine for machining profiles of door and window frames and leaves, on which each of the perforations, recesses and slots that each profile requires to be assembled and carry out its functions is made by means of a tool. This machine has two essential disadvantages. The first is that the tool works bathed in oil. This is an extremely serious disadvantage for the later aesthetics of the window or door. Dealers cannot sell an oily window or door. Systematically cleaning a production run is a very arduous task. The second disadvantage involved is that each of the operations is performed from a point "0", carrying out each of the machining tasks, perforations, slots, recesses, one by one. Two disadvantages stem from this, which are firstly that, if there were to be just a millimetre error in the cutting of the profile, the machining of the end opposite point "0" would be displaced in respect of the end, that is, where the joints of the profiles are inserted, and the part would thus be faulty. The other consists in the slow speed of operations for this reason. The system having to be one by one indicates that the time of each operation depends on the specific job. It also proves difficult to estimate production times. By working with a tool, this machine means that after a few operations said tool must be replaced with another sharpened or suitable one. Holding up the work of the machine for each maintenance operation is also a disadvantage, without which it would prevent performing machining operations in conditions acceptable for the market.

WO 96/03254 (nearest state of the art) refers to a process and machine for producing elongated sections of definitive length by machining, which comprises a mobile machining head which is able to produce any kind of machining by means of a tool carrier which can be moved transversely to the longitudinal axis of the elongated section and carries out the forward feed motion.

This invention provides a method for machining frame profiles as indicated in claim 1.

The method facilitates the work even if there were to be any small measuring differences in respect of the ideal, which would on assembly be concealed or absorbed by the clearances proper to said parts.

The invention also provides a machine for machining profiles, such as profiles of door or window frames and leaves, as indicated in claim 7.

The dependent claims define preferred embodiments of the invention.

In order to make the following explanation clearer, three sheets of drawings are adjoined, representing an embodiment of this invention in three figures, in which:

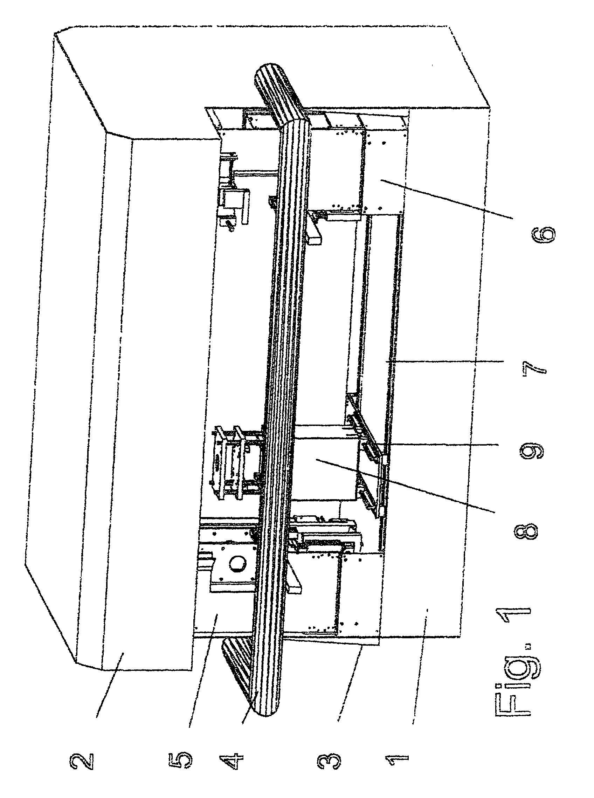

Figure 1 shows a general perspective view of the machine according to the invention, provided with a cover and a safety barrier;

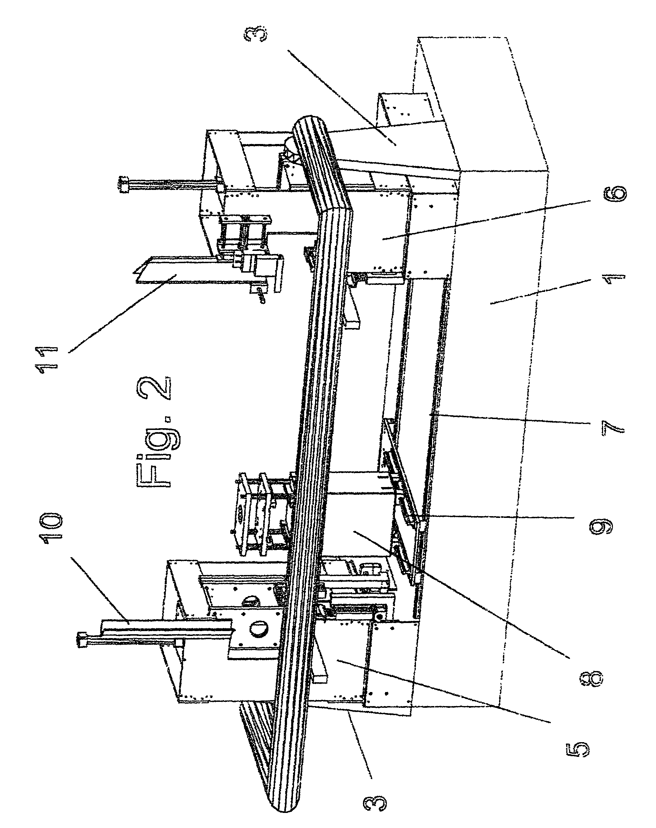

Figure 2 shows a perspective view of the same machine in which the cover has been removed;

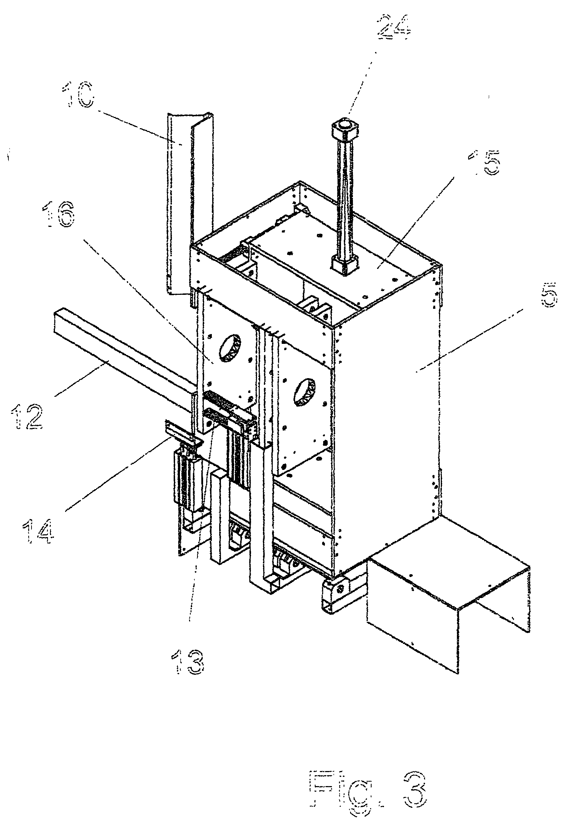

Figure 3 shows a perspective view of one of the machining assemblies for one of the ends of the profiles to be machined;

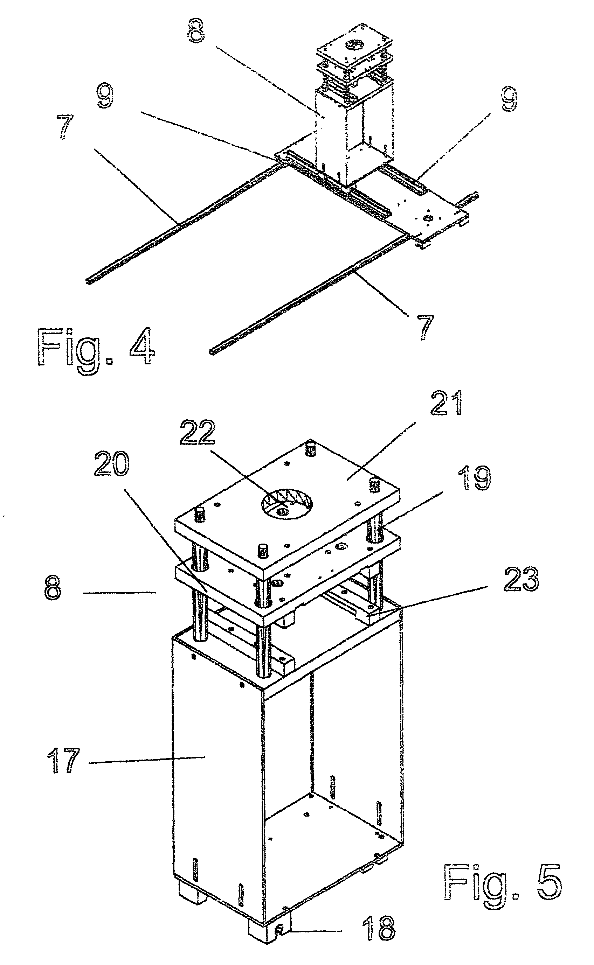

Figure 4 shows a perspective view of a central machining assembly (in any position between the ends);

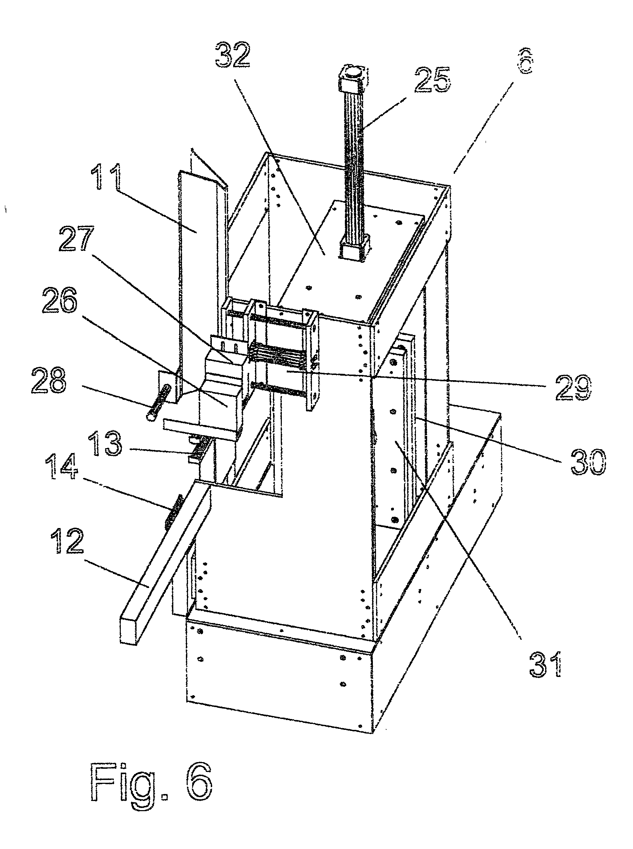

Figure 5 shows a detail of the central machining assembly;
Figure 6 shows a perspective view of a machining assembly of the other end of the profile to be machined, in which the means for feeding the profiles are shown; and

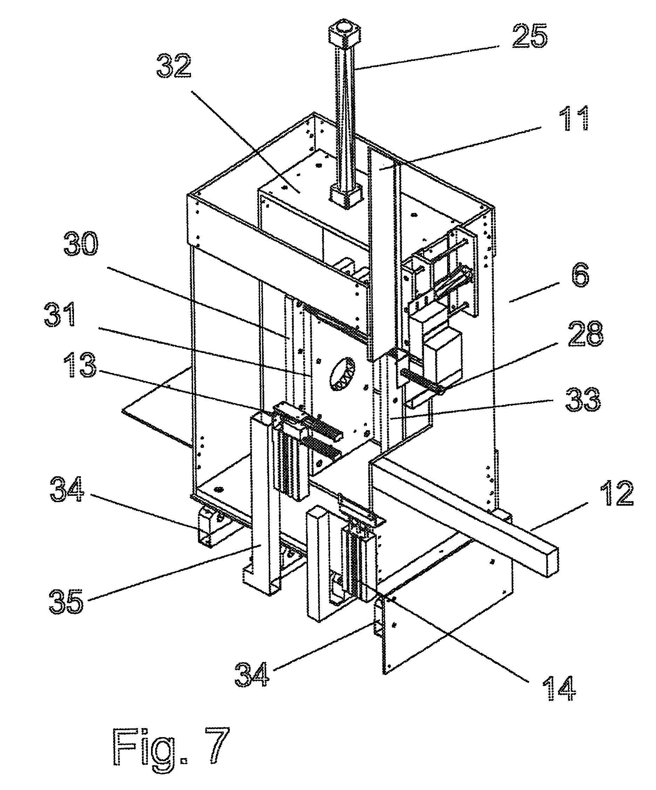

Figure 7 shows a perspective view of the machining assembly of Figure 6 from another angle.

In accordance with the embodiment represented in said figures, 1 represents a base or bed, which can be covered by a protection cover 2, against which, hinged in respect of side supports 3, there is a protection barrier 4, so that, complying with safety norms, the machine is locked against any movement when this is pulled down.

On the base or bed 1 there is at least one machining assembly 5, set at one of the ends, and preferably also at least a second machining assembly 6 at the opposite end.

Given that the profiles are not always of the same size, at least one of the machining assemblies 6 has been designed to be mobile in respect of the other one, for which purpose guides 7 have been included to let said machining assemblies 5 and 6 move together.

An additional machining assembly 8 has also been designed, for operation between the two ends of the profile, and which can be brought closer or taken away from the profile to be machined thanks to guides 9 fitted for this purpose, perpendicular to the pulling guides 7.

The machining assembly 8 as well as its corresponding guides 9 can also be moved along the pulling guides 7.

The machine has a set of guides 10, 11 for inserting the profiles to be machined, located, in accordance with the embodiment represented, linked with each of the end machining assemblies 5 and 6.

When a set of profiles to be machined is placed on the guides 10 and 11 fitted on the machine, which should preferably have a "V" shaped profile with openings facing each other matching the shape of the ends of the profile, and a mechanism for securing the profile column is activated, only the one at the bottom is allowed to drop, this being picked up by a clamp 13, taken to the machining position, to be machined and removed by the same clamps 13, after which it is picked up by a collector 14 and left in the outlet guides 12.

The clamps 13 held by arm 35 have two movements, one forward for collecting the part and holding this while it is machined, and one for withdrawing to release the part, when the collector 14 has already held the machined profile. The clamps open to pick up and remove the profiles, and close for moving these to the machining position and during this machining process.

The collector 14 has a ridge at the front, which facilitates separating the profile from the clamp 13.

What is described herein for each side of the machine is of course also fitted on the opposite side, meaning that the operations are simultaneous on each of the sides.

The machining assembly 5 has a support 15 for a pneumatic cylinder 24. The pneumatic system acts on the die holder assembly 16 (one of the parts), this assembly being able to be moved to the machining position, to later be withdrawn on the clamps 13 and on the collector 14, as well as in the selection of the die stamping dies, of which there may be more than one.

The central machining assembly 8 has a support body 17 which is placed on items 18, which can slide along the guides 9. On guides 19 there is a fixed support 21, which will hold pneumatic means acting through hole 22 on the body 20, which will slide through the action of said pneumatic means towards the support body 17, so that when the die and female die chosen are placed in their housing 23, and after transversally moving until the profile is gripped, said profile is machined in its central zone (in any position between the ends).

The mobile machining assembly 6 (both ends could also be mobile) is able to slide along the guides 7 by guide followers 34 and has in turn pneumatic means 25 held on a part 32, able to be moved with the die holders to the profile for machining and later withdrawn, for fitting the relevant set of dies, between the mobile element 31 and the corresponding fixed part 33, and where part 30 holds the pneumatic pushing means.

As for the mobile machining assembly 5, clamps 13 are located on this as well as a collector 14 whose function has already previously been described.

29 shows a device for small-scale adjustment of the guide on the profile, this adjustment device being used to prevent any small gaps which might be left by the large-scale adjustment of the full machining assembly 6.

For removing a profile there is a retainer 28 which presses against the penultimate profile and thus holds all the ones above it with this, allowing the last one to drop through gravity until this is picked up by a rod joined to bodies 26 and 27 until the clamps 13 pick this up and hold it for machining.

Each of the die holders arranged on each of the machining assemblies can consist of one or more die assemblies. In the event of there being several assemblies, there are means for placing these in accordance with the machining requirements.

The use of sets of several dies allows replacement with no need for any mechanical operation on the machine.

The machine has a control system for controlling, amongst others, the positioning of the machining assemblies holding the corresponding feed and outlet guides, selecting the type of machining which will determine the set of dies to be used for each machining assembly and selecting whether a central machining operation should be performed (done on one of every so many profiles, which will be the one to take the handle).

Each of the movements of the profiles requires each of the sensors fitted for this purpose to be excited. In the event of one of these not being excited, the machine stops, since if a profile has gone in and the exit has not been detected, its movement could give rise to a fault.

To sum up, the machine has:
A programming module which carries out the following functions:
   - Establishing the measurement of the profile length.
   - Establishing the cutting distances. These distances are measured from the ends. This thus makes it easier for any errors in the length (one or two millimetres) to still allow proper assembly of the mitres, where applicable, given that on these the connecting part which reinforces the angle requires a pre-set distance to the end.
   - Allowing the selection of the dies which will operate in the event of these being selective, or in other cases facilitating die changing.
   - Allowing perforations to be made, flattening operations and on a number of parts, the slots for installing the cremorne bolt or espagnolette.
The machine operating system involves the following steps:
   - Positioning the machine in respect of the profile; dimensions and manufacturing programme are implemented in this program.
   - By being formed of two parts, one at each end of the machine, the feeder is designed exactly to the size of the profile as explained above, with one of the frame members 6 being located on the fixed part 2 and the other on part 4 located at the other end.
   - Selection of the die which should operate through the double piston 15.
   - Programming the cremome bolt cutting where applicable.
Its operation takes place:
   a) By insertion of a set of profiles of identical size between the frame members 6.
   b) By movement of the profile suppliers 12 towards the central part.
   c) By securing the profile to the central part and by insertion in said profile of the lateral dies, whose frame members can move in this direction by means of pistons 23.
   d) By gripping the dies on the press tools so that these do not damage or bend the profiles.
   e) By pneumatically loading the press tools which are triggered in a single operation.
   f) By ejecting the part by means of the pneumatic cylinder located on the central body.
   g) By collection by means of collectors 18 which are extended by pneumatic pistons 17 and which, when withdrawing, let the part drop into the finished product tray formed by the guide for outlet of the profiles at the end 4.
   h) By each profile passing by sensors which allow the following part to be fed in.

This is not possible if there is such a number of parts that the following one does not fit on the outlet tray.

The machine stops even though there is space in the finished part magazine, if there are no parts in the supplier, this being detected by the relevant sensor.

Obviously both the method and the machine may include a prior stage, outside the scope of this invention, in which this starts from a continuous profile and the cutting is done as part of the same process.

This is for use in industrial applications, in machining profiles and in machines for machining profiles.

## Claims

1. Method for machining door and window frame and leaf profiles starting from cut profiles, including feeding and adjusting a longitudinal profile into a machining machine, and machining at least one of the ends of the profile,
**characterised in that** this consists of the following cyclic operations, according to pre-set parameters:
- Adjustment of end machining assemblies comprising a set of feed guides which form an assembly feeding the length of the profiles to be machined
- arranging the profiles in said feed guides, and successively, for each profile to be machined:
o taking a profile from the feed assembly, by means of a profile supplier, carried out by movement of this from the feeder to the machining position, and securing the remaining profiles located in the feed assembly
o placing these in their machining position
o holding them in the machining position
o adjusting the machining heads against the ends of the profile
o selecting the set of dies to be used, depending on the machining design required;
o inserting the dies and female dies selected;
o machining the ends
o removing the dies;
o ejecting the profile.

2. Method, according to claim 1, **characterised in that** the phase for machining the ends of the profile also includes a central die stamping operation in each of the cycles in which this is programmed, performed simultaneously with the lateral die-stamping operations.

3. Method, according to claim 1, **characterised in that** feeding from a set of profiles also consists of taking the profiles by a profile supplier by movement of the latter from the feeder to the working point, where these are adjusted and held in the machining position during the machining stage.

4. Method, according to claim 1, **characterised in that** a selection of a set of dies available for the machining operations is performed, in accordance with pre-set parameters.

5. Method, according to claim 1, **characterised in that** the machining is done after insertion of the dies or female dies in the gaps existing at the ends of the profile, after which the dies are moved out of the position in which the profile is located.

6. Method, according to claim 1, **characterised in that** the removal of the profile from its machining position includes ejection by means of a pusher, collection by means of a collector and conveyance to the exit position.

7. Machine for machining profiles, such as window or door frame or leaf profiles, having lateral machining assemblies (5,6) for the end of a profile, one at 'each side, with at least one of said assemblies being able to be moved in respect of the other for proper adjustment of these assemblies in respect of the length of said profile, with said machining assemblies (5,6) bearing the corresponding machining body, **characterised in that** the machining assemblies comprise a set of guides (10, 11) for inserting the profiles to be machined.

8. Machine, according to claim 7, **characterised by** also having a machining assembly able to assume a variable position between the ends of the profile to be machined.

9. Machine, according to claims 7 and 8, **characterised in that** the machining body located on each of the machining assemblies is able to be adjusted to the profile for its machining and later withdrawn for the ejection of said profile and feeding a new profile.

10. Machine, according to claims 7 and 9, **characterised in that** each of the lateral assemblies (5,6) has means for locating and holding the part during its machining operations, consisting in a clamp (13) which is withdrawn to wait for a new profile or extended for taking a new profile, and whose ends are able to close for holding the profile in its machining position.

11. Machine, according to claims 7 and 8, **characterised in that** each of the lateral machining means have in turn a means for adjusting the machining head against the corresponding end of the profile to be machined.

12. Machine, according to claims 7 and 9, and 11, **characterised in that** the machining tool is selected from a set of machining tools in accordance with selection by means of a control body according to the pre-set characteristics of the profile to be machined.

13. Machine, according to claims 7 to 9, and 11 and 12, **characterised in that** the machining is performed by means of a die.

14. Machine, according to claims 11 to 13, characterised because the die or female die is inserted from the end inside the part in the machining stage.

15. Machine, according to claim 7, **characterised by** having, at the bottom of the guides, means (28) for securing the pile of profiles set out in the feed guides until a new profile is collected.

16. Machine, according to claim 7, **characterised by** having means for removing the machined profile, consisting in moving arms (14) which hold the profile prior to removal of the clamp (13) and which drop until reaching the exit zone.

17. Machine, according to claim 7, **characterised by** having means for controlling the supply of the profile to be machined.

## Patentansprüche

1. Verfahren zur maschinellen Bearbeitung von Rahmen- und Flügelprofilen für Fenster und Türen auf der Basis von Profilzuschnitten, einschliesslich Zuführung und Justierung eines Längsprofiles in einer Bearbeitungsmaschine, und Bearbeitung von wenigstens einem Profilende,
**dadurch gekennzeichnet, dass**
dies aus den folgenden Arbeitszyklen entsprechend den voreingestellten Parametern besteht:
- Justierung der Halter der Beschickungsschienen für die Zuführung der zu bearbeitenden Profile
- Anordnung der Profile in den genannten Beschickungsschienen mit anschliessendem Ablauf für jedes zu bearbeitende Profil:
• Übernahme eines Profils durch einen Profilanleger, der sich zur Teilübergabe von der Beschickungsvorrichtung zur Bearbeitungsvorrichtung bewegt, sowie Sicherung der restlichen Profile in der Beschickungsvorrichtung
• Einlegen des Profils in die Beaarbeitungsposition
• Fixierung in der Bearbeitungsposition
• Einstellung der Bearbeitungsköpfe zu den Profilenden
• Wahl der zum Einsatz kommenden Stanzformen entsprechend der auszuführenden Stanzung;
• Einsetzen der gewählten Stanzformen und der Gesenke
• Bearbeitung (Stanzung) der Profilenden
• Entfernung der Stanzformen
• Ausstoss des Profile.

2. Verfahren n ach Anspruch 1 , **dadurch gekennzeichnet, dass** die Bearbeitungsphase der Profilenden außerdem in jedem dazu entsprechend programmierten Zyklus eine Mittelstanzung einschließt, die simultan mit den seitlichen Stanzungen erfolgt.

3. Verfahren n ach Anspruch 1 , **dadurch gekennzeichnet, dass** die Beschickung der Profile außerdem die Übernahme der Profile durch eine Profilübergabevorrichtung beinhaltet, die sich von der Beschickungsvorrichtung zum Arbeitspunkt bewegt und in der die Profile ausgerichtet und für die Dauer der Bearbeitung in der Bearbeitungsposition fixiert werden.

4. Verfahren n ach Anspruch 1 , **dadurch gekennzeichnet, dass** für die Bearbeitung ein Satz verfügbarer Stanzformen entsprechend den programmierten Parametern zusammengestellt wird.

5. Verfahren n ach Anspruch 1 , **dadurch gekennzeichnet, dass** die Bearbeitung nach dem Einsetzen der Stanzformen oder Gegenformen in die vorhandenen Aussparungen in den Profilenden erfolgt; im Anschluss daran verlassen die Stanzformen die Profilposition.

6. Verfahren n ach Anspruch 1 , **dadurch gekennzeichnet, dass** der Profilausstoß aus der Bearbeitungsposition die Mitnahme durch einen Mitnehmer, die Erfassung durch eine Auffangvorrichtung und die Übergabe an die Ablageposition beinhaltet.

7. Maschine für die Bearbeitung von Proiflen, zum Beispiel Rahmen- und Flügelprofilen für Fenster und Türen, ausgestattet mit Ausrichtvorrichtungen (5,6) für eine korrekte Ausrichtung der Profile in der Bearbeitungsposition, wobei wenigstens eine der Ausrichtvorrichtungen mit Bezug auf die andere verschiebbar ist, **dadurch gekennzeichnet, dass** die Bearbeitungsvorrichtung einen Satz Führungen (10, 11) aufweist für die Aufnahme der zu bearbeitenden Profile.

8. Maschine nach Anspruch 7, **dadurch gekennzeichnet, dass** sie über eine weitere Beareitungsgruppe verfügt, die eine einstellbare Position zwischen den zu bearbeitenden Profilenden einnehmen kann.

9. Maschine nach Anspruch 7 und 8, **dadurch gekennzeichnet, dass** die auf jeder der Bearbeitungsgruppen installierte Bearbeitungsvorrichtung auf das zu bearbeitende Profil eingestellt und anschließend zurückgefahren werden kann zwecks Ausstoß des fertigen Profils und Beschickung mit einem neuen Profil.

10. Maschine nach Anspruch 7 und 9, **dadurch gekennzeichnet**, das jede der seitlichen Bearbeitungsgruppen (5,6) über entsprechende Vorrichtungen zum Einlegen und Fixieren des Werkstücks während der Bearbeitung verfügen, bestehend aus einer Zange (13), die im Wartezustand auf ein neues Profil zurückgezogen bzw. zur Aufnahme eines neuen Profils ausgefahren wird, wobei die Zangenenden zum Halten des Profils in der Bearbeitungsposition verriegelbar sind.

11. Maschine nach Anspruch 7 und 8, **dadurch gekennzeichnet, dass** jede der seitlichen Bearbeitungsvorrichtungen ihrerseits über eine Vorrichtung zum Einstellen de Bearbeitungskopfes auf das zu bearbeitende Profilende ausgerüstet ist.

12. Maschine nach den Ansprüchen 7 bis 9 und 11, **dadurch gekennzeichnet, dass** das Bearbeitungswerkzeug mit einer Steuervorrichtung entsprechend den vorgegebenen Merkmalen des zu bearbeitenden Profils aus einem Werkzeugsatz gewählt wird.

13. Maschine nach den Ansprüchen 7 bis 9, 11 und 12, **dadurch gekennzeichnet, dass** die Bearbeitung mit einem Stanzwerkzeug erfolgt.

14. Maschine nach den Ansprüchen 11 bis 13, **dadurch gekennzeichnet, dass** die Stanzform bzw. Gegenstanzform in der Bearbeitungsphase vom inneren Ende des Werkstücks her eingeführt wird.

15. Maschine nach Anspruch 7, **dadurch gekennzeichnet, dass** im unteren Teil der Führungen ein Rückhaltemechanismus (28) angeordnet ist zur Sicherung des auf den Beschickungsschienen angeordneten Profilstapels bis zur Aufnahme eines neuen Profils.

16. Maschine nach Anspruch 7, **dadurch gekennzeichnet, dass** sie über Mittel zur Rückführung des bearbeiteten Profils verfügen, bestehend aus beweglichen Armen (14), die das Profil vor dem Zurückfahren der Zange (13) halten und sich nach unten zur Ausstoßvorrichtung bewegen.

17. Maschine nach Anspruch 7, **dadurch gekennzeichnet, dass** sie über Steuermittel für die Beschickung des zu bearbeitenden Profils verfügt.

## Revendications

1. Méthode d'usinage de cadres de portes, de fenêtres ou de battants, partant de profils découpés, qui inclut l'alimentation et l'ajustage d'un profil longitudinal dans une machine à usiner, et l'usinage d'au moins l'une des extrémités du profil
qui se **caractérise par le fait que**
il consiste en les opérations cycliques suivantes, selon des paramètres préétablis:
- Ajustage de supports qui soutiennent des guides d'alimentation qui forment un ensemble qui alimente en longueur des profils devant être usinés
- Disposition des profils sur les dits guides d'alimentation et, successivement, pour chacun des profils à usiner :
o Prise d'un profil de l'ensemble de l'alimentation, moyennant un alimentateur de profils, conduit par le biais du déplacement de celui-ci depuis l'alimentateur vers la position d'usinage, et fixation du reste des profils restants qui se trouvent dans l'ensemble d'alimentation.
o Mise en place de ces derniers sur la position d'usinage.
o Fixation de ces derniers sur la position d'usinage.
o Ajustage des poupées de la machine sur les extrémités du profil
o Sélection de l'ensemble des mandrins à utiliser, selon le plan d'usinage exigé ;
o Insertion des mandrins et des mandrins femelles choisis;
o usinage (étampage par mandrins) des extrémités
o retrait des mandrins;
o rejet du profil.

2. Méthode, telle qu'exprimée sur la revendication 1, qui se **caractérise par le fait que** la phase d'usinage des extrémités du profil inclut en outre dans chacun des cycles dans lequel il sera programmé, un étampage central, mené simultanément avec les étampages latéraux.

3. Méthode, telle qu'exprimée sur la revendication 1, qui se **caractérise par le fait que** l'alimentation à partir d'un ensemble de profils comprend en outre la prise des profils par un serveur de profils moyennant déplacement de ce dernier à partir de l'alimentateur jusqu'au poste de travail, dans lequel ils sont ajustés et assujettis en position d'usinage durant la phase d'usinage.

4. Méthode, telle qu'exprimée sur la revendication 1, qui se **caractérise par le fait que** pour l'usinage, une sélection est faite d'un ensemble de matrices disponibles, conformément aux paramètres programmés.

5. Méthode, telle qu'exprimée sur la revendication 1, qui se **caractérise par le fait que** l'usinage se fait après l'insertion des matrices de contre matrices dans les creux existant sur les extrémités des profils , après quoi les matrices se déplacent hors de la position dans laquelle se trouve le profil.

6. Méthode, telle qu'exprimée sur la revendication 1, qui se **caractérise par le fait que** l'évacuation du profil de la position d'usinage inclut l'expulsion au moyen d'un poussoir, le ramassage au moyen d'un ramasseur et le transport vers la position de sortie.

7. Machine à usiner des profils, tels que des cadres de portes, de fenêtres ou de battants, qui inclut des ensembles d'usinage (5, 6) pour l'ajustage adéquat du profil sur sa position d'usinage, l'un d'eux pouvant être déplacé par rapport à l'autre, et qui se **caractérise par le fait que** l'ensemble d'usinage comprend en ensemble de guides (10, 11) servant à insérer les profils devant être usinés.

8. Machine, selon la revendication 7, qui se **caractérise par le fait qu'**elle dispose en outre d'un ensemble d'usinage susceptible d'adopter une position variable entre les extrémités du profil devant être usiné.

9. Machine, selon les revendications 7 et 8, qui se **caractérise par le fait que** l'organe d'usinage situé dans chacun des ensembles d'usinage est susceptible d'être ajusté au profil pour son usinage et ultérieurement être rétracté pour l'expulsion du dit profil et l'alimentation d'un nouveau profil.

10. Machine, selon les revendications 7 et 9, qui se **caractérise par le fait que** chacun des ensembles latéraux (5, 6) dispose de moyens de mise en place et d'assujettissement de la pièce pendant son usinage, qui consistent en une pince (13) qui est rétractée pour attendre un nouveau profil ou étendue pour la prise d'un nouveau profil , et dont les extrémités sont susceptibles de se fermer pour l'assujettissement du profil en position d'usinage.

11. Machine, selon les revendications 7 et 8, qui se **caractérise par le fait que** chacun des moyens d'usinage latéraux dispose à son tour d'un dispositif d'ajustage du mandrin d'usinage contre l'extrémité correspondante du profil à usiner.

12. Machine, selon les revendications 7 à 9, et 11, qui se **caractérise par le fait que** l'outil d'usinage est sélectionné d'un ensemble d'outils d'usinage selon un organe de contrôle en fonction des caractéristiques prédéfinies du profil à usiner.

13. Machine, selon les revendications 7 à 9, 11 et 12, qui se **caractérise par le fait que** l'usinage se fait au moyen de matrice.

14. Machine, selon les revendications 11 à 13, qui se **caractérise par le fait que** la matrice ou contre matrice est introduite de l'extrémité à l'intérieur de la pièce dans la phase d'usinage.

15. Machine, selon la revendication 7, qui se **caractérise par le fait qu'**elle dispose, sur la partie inférieure des guides de moyens d'assujettissement (28) d e l'empilement de profils d isposé dans les g uides d'alimentation, jusqu'au ramassage d'un nouveau profil.

16. Machine, selon la revendication 7, qui se **caractérise par le fait qu'**elle dispose de moyen de ramassage du profil usiné qui consiste en des bras mobiles (14) qui assujettissent le profil préalablement au retrait de la pince (13), et qui descendent jusqu'à atteindre la zone de sortie.

17. Machine, selon la revendication 7, qui se **caractérise par le fait qu'**elle dispose de moyens de contrôle de la fourniture du profil à usiner.
